# EUROPÄISCHE PATENTSCHRIFT

(11) **EP 3 291 234 B1**
(45) Veröffentlichungstag und Bekanntmachung des Hinweises auf die Patenterteilung: **09.10.2019**
(21) Anmeldenummer: 16186498.8
(22) Anmeldetag: 31.08.2016
(51) Int. Cl.: G10L 25/60, G10L 25/66, G10L 25/21

(54) **VERFAHREN ZUM BEURTEILEN EINER QUALITÄT EINES STIMMEINSATZES EINES SPRECHENDEN**
METHOD FOR EVALUATION OF A QUALITY OF THE VOICE USAGE OF A SPEAKER
PROCEDE D'ESTIMATION DE LA QUALITE DE LA VOIX D'UNE PERSONNE QUI PARLE

(43) Veröffentlichungstag der Anmeldung: 07.03.2018
(73) Patentinhaber: Digithep GmbH, 10117 Berlin (DE)
(72) Erfinder: Hönig, Florian, 91058 Erlangen (DE)
(74) Vertreter: Raffay & Fleck

(56) Entgegenhaltungen:
- MARC GARELLEK: "The timing and sequencing of coarticulated non-modal phonation in English and White Hmong", JOURNAL OF PHONETICS, SEMINAR PRESS, LONDON, GB, Bd. 40, Nr. 1, 2. Oktober 2011 (2011-10-02), Seiten 152-161, XP028351030, ISSN: 0095-4470, DOI: 10.1016/J.WOCN.2011.10.003 [gefunden am 2011-10-05]
- Kenneth N. Stevens: "Acoustic Phonetics", , 1. Januar 1998 (1998-01-01), Seiten 422-451, XP055344041, London Gefunden im Internet: URL:N/A [gefunden am 2017-02-09]
- Yen-Liang Shue ET AL: "VOICESAUCE: A PROGRAM FOR VOICE ANALYSIS", PROCEEDINGS OF THE 17TH INTERNATIONAL CONGRESS OF PHONETIC SCIENCES, Volume 3 of 3, 17. August 2011 (2011-08-17), Seiten 1846-1849, XP055330354, Gefunden im Internet: URL:http://www.phonetics.ucla.edu/voicepro ject/Publications/Shue-etal_2011_ICPhS.pdf [gefunden am 2016-12-19]
- David Talkin: "A Robust Algorithm for Pitch Tracking (RAPT)", Speech Coding and Synthesis, 1. Januar 1995 (1995-01-01), Seiten 495-518, XP055340996, Gefunden im Internet: URL:https://www.ee.columbia.edu/~dpwe/pape rs/Talkin95-rapt.pdf [gefunden am 2017-02-01]

## Beschreibung

Die vorliegende Erfindung betrifft ein Verfahren zum Beurteilen einer Qualität eines Stimmeinsatzes eines Sprechenden. Sie betrifft ferner ein Datenverarbeitungsprogramm für die rechnergestützte, automatisierte Beurteilung einer Qualität eines Stimmeinsatzes eines Sprechenden und ein ein solches Datenverarbeitungsprogramm enthaltendes rechnergestütztes Datenverarbeitungsgerät.

Es sind im Stand der Technik unterschiedliche Verfahren und Methoden zur Beurteilung der Art eines gesprochenen Vokals bekannt, z.B. aus GARELLEK, M. "The timing and sequencing of coarticulated non-modal phonation in English and White Hmong", Journal of Phonetics, 2012, Band 40, Seiten 152 bis 161, oder auch aus STEVENS, Kenneth N., Acoustic Phonetics, London, 1998, Seiten 422 bis 451.

Die Beurteilung der Qualität eines Stimmeinsatzes, insbesondere nach einem sog. harten oder weichen Stimmeinsatz, ist für Sprechtraining von Bedeutung. Dies gilt insbesondere, aber nicht ausschließlich, für das Sprechtraining für Stotterer. Aber auch für die Ausbildung von Sprachtherapeuten, die ein bewusstes Einsetzen ihrer Stimme erlernen müssen, um diese Fähigkeit weiter zu vermitteln, ist die Beurteilung der Qualität eines Stimmeinsatzes von Bedeutung, wie auch z.B. in der Ausbildung von Personen, die viel mit ihrer Sprache arbeiten.

Stottern ist eine Sprechstörung, bei der unfreiwillige Wiederholungen, Dehnungen und Blockaden auftreten. Weltweit ist etwa 1% der Bevölkerung betroffen. Stotternde leiden teils erheblich unter sozialen Ängsten und Ausgrenzung. Die Sprechstörung gilt nach derzeitigem Kenntnisstand als nicht heilbar, kann aber durch Sprechübungen recht gut beherrscht und in ihren Auswirkungen unterdrückt werden. Es besteht also einerseits die Notwendigkeit, geeignete Sprechübungsprogramme zu entwickeln und anzubieten; aus kommerzieller Sicht existiert ein nicht unerheblicher Markt für entsprechende Dienstleistungen oder Produkte.

Ein verbreiteter und erfolgreicher Ansatz eines entsprechenden Vorgehens ist der sprechtechnische Ansatz. Hierbei wird eine neue, veränderte Sprechweise erlernt, bei der Stotterereignisse seltener auftreten. Eine der prominentesten Varianten davon ist Websters "Precision Fluency Shaping Program" (PFSP), welches bereits zu Beginn der 1970er Jahre entwickelt worden ist und sich u.a. durch weiche Stimmeinsätze, Dehnungen von Lauten, Abschwächung und Verstimmhaftung von Konsonanten auszeichnet.

Ein Bestandteil der Arbeit mit dem Stotternden ist häufig ein computergestüztes Feedback zur Aussprache. Eine deutsche Anpassung eines PFSP Programms ist unter dem Namen Kasseler Stottertherapie (KST) etabliert und als hoch wirksam erkannt.

Ein Kernaspekt von Fluency Shaping und verwandten Ansätzen sind die weichen Stimmeinsätze. Durch sie kommen Blockaden erst gar nicht zustande. Weiche Stimmeinsätze werden von Stotternden häufig schon intuitiv dazu verwendet, um Blockaden aufzulösen. Bei weichen Stimmeinsätzen beginnt die Tonerzeugung durch die Glottis, ohne dass zuvor ein Verschluss durch die Glottis gebildet wurde. Dadurch setzt die Stimme weich und leise ein. Im Gegensatz dazu zeichnet sich ein harter Stimmeinsatz durch einen vorherigen Glottisverschluss aus, der dann in Form eines plosivartigen Geräusches gelöst wird. Diese Unterschiede lassen sich beispielsweise durch den Vergleich von Elektroglottogramm und Sprachsignal oder in Hochgeschwindigkeitsvideos der Glottis nachvollziehen. Weiche Stimmeinsätze zeichnen sich außerdem durch die Abwesenheit von Laryngalisierungen (Knarrstimme, d. h. unregelmäßige tieffrequente Stimmbandschwingungen) aus.

Websters Fluency Shaping und verwandte Methoden wie die KST verwenden eine computergestützte automatische Analyse des Sprachsignals, um dem Übenden Rückmeldung zu seinen Stimmeinsätzen zu geben. Bei den existierenden Methoden wird für das Erkennen von Stimmeinsätzen und das Beurteilen einer Qualität derselben ausgenutzt, dass sich die Weichheit des Stimmeinsatzes üblicherweise in einem allmählichen Anstieg der Lautstärke manifestiert.

Beispielsweise wird von Webster der Verlauf der Lautstärke während der ersten 100 Millisekunden des Stimmeinsatzes verwendet, um zu einer automatischen Klassifikation eines weichen oder harten Stimmeinsatzes zu gelangen. Auch andere Autoren beschreiben die Verwendung des Lautstärkeverlaufes einer Äußerung, um Stimmeinsätze automatisch zu beurteilen. Entsprechende Beschreibungen finden sich z.B. in der 4,020,567.

Unter einer Reihe von Parametern, die den Lautstärkeverlauf beschreiben, wird als bester der Logarithmus der sog. Rise Time (so bezeichnen H.F. Peters et al in "Perceptual judgement of abruptness of voice onset in vowels as a function of the amplitude envelope", Journal of Speech and Hearing Disorders, vol. 51, no. 4, S. 299-308, 1986 die Zeit, die zwischen dem Erreichen von 10% und 90% der maximalen Lautstärke vergeht) identifiziert. Unter den sehr kontrollierten Bedingungen dieser Studie korreliert dieser Parameter recht gut mit der perzeptiven (graduellen) Einschätzung der Weichheit des Stimmeinsatzes.

In der US 2012/0116772 A1 ist ein allgemeines Client-Server-System zur Unterstützung von allgemeiner Sprachtherapie beschrieben. Auf einem mobilen Endgerät wird die Sprache des Patienten aufgenommen und automatisch analysiert. Das Sprachsignal wird zu einem Server übertragen, um weitere automatische Analysen vorzunehmen und dem Therapeuten Möglichkeiten zu bieten, in die Therapie einzugreifen. Die automatischen Analysen schließen auch die Analyse des Stimmeinsatzes mit ein. Ebenso wird Fluency Shaping als Therapieansatz für Stottern erwähnt. Die Extraktion akustischer Parameter zur automatischen Analyse ist allerdings sehr breit und generisch beschrieben. Zur Analyse von Stimmeinsätzen wird nicht näher ausgeführt, wie und anhand welcher Parameter diese durchgeführt wird.

Soweit überhaupt im Detail beschrieben, greifen die aus dem Stand der Technik bekannten Systeme zur Klassifikation des Stimmeinsatzes allein auf den Lautstärkeverlauf zurück. Dies ist in zweierlei Hinsicht problematisch:
Zunächst ist ein leiser, allmählicher Lautstärkeanstieg weder hinreichend noch notwendig für einen weichen Stimmeinsatz. Beispielsweise kann ein knarrender Stimmeinsatz einen solchen Lautstärkeanstieg aufweisen. Knarren ist jedoch beim Fluency Shaping auf jeden Fall zu vermeiden.

Umgekehrt kann ein Stimmeinsatz weich sein und trotzdem schnell in der Lautstärke ansteigen. Es wird also die Lautstärke als unzureichender, bzw. unvollständiger Parameter für die Bestimmung und Klassifizierung eines Stimmeinsatzes als "weich" oder eben "nicht weich" gesehen.

Zwar ist dies kongruent mit der üblichen Hilfestellung, leise, allmählich lauter werdende Stimmeinsätze zu produzieren, dies ist aber dennoch problematisch. Unter sehr kontrollierten Bedingungen mögen Parameter aus dem Lautstärkeverlauf zum Erfolg führen. Unter realistischen Bedingungen, d.h. mit nichtprototypischen Stimmeinsätzen und mit heterogenem und/oder kostengünstigem und damit minder exaktem Audiozubehör ist die Klassifikationsaufgabe hingegen deutlich schwerer und allein über die Analyse des Lautstärkenverlaufes nicht ausreichend genau zu lösen.

Vor diesem Hintergrund ist es Aufgabe der Erfindung ein Verfahren zum Beurteilen der Qualität eines Stimmeinsatzes anzugeben, mit dem in einem automatisierten Vorgehen, insbesondere rechnergestützt, weiche Stimmeinsätze ganz unterschiedlicher Sprecher zuverlässig erkannt werden können.

Diese Aufgabe wird gelöst durch ein Verfahren zum Beurteilen einer Qualität eines Stimmeinsatzes eines Sprechenden mit den Merkmalen des Anspruchs 1. Vorteilhafte Weiterbildungen des erfindungsgemäßen Verfahrens sind in den abhängigen Ansprüchen 2 bis 5 bezeichnet. Ein weiterer Aspekt der Lösung liegt zudem in einem Datenverarbeitungsprogramm mit den Merkmalen des Anspruchs 6, zu dem in den Ansprüchen 7 bis 9 vorteilhafte Weiterbildungen angegeben sind. Schließlich werden mit der Erfindung auch ein rechnergestütztes Datenverarbeitungsgerät mit den Merkmalen des Anspruchs 10 und zu diesem vorteilhafte Ausgestaltungsvarianten mit den optionalen Merkmalen der Ansprüche 11 und 12 angegeben.

Bei dem erfindungsgemäßen Verfahren zum Beurteilen einer Qualität eines Stimmeinsatzes eines Sprechenden wird demnach ein akustisches Sprachsignal des Sprechenden erfasst und in ein digitales Sprachsignal gewandelt. Das digitale Sprachsignal wird dann in seinem zeitlichen Verlauf analysiert, um
a. in dem zeitlichen Verlauf des digitalen Sprachsignals einen Zeitpunkt des Stimmeinsatzes des Sprechenden zu bestimmen,
b. eine Grundfrequenz des Sprachsignals zum Zeitpunkt des Stimmeinsatzes zu ermitteln,
c. aus dem digitalen Sprachsignal in einem vorgegebenen Zeitintervall ab dem Zeitpunkt des Stimmeinsatzes zeitlich aufgelöst den Verlauf der bei der Grundfrequenz in dem Sprachsignal enthaltenen Energie zu ermitteln;
d. aus dem digitalen Sprachsignal in dem vorgegebenen Zeitintervall zeitlich aufgelöst den Verlauf der bei wenigstens einer harmonischen Vielfachen der Grundfrequenz in dem Sprachsignal enthaltenen Energie zu ermitteln;
e. den zeitlichen Verlauf des Verhältnisses der in Schritten c und d ermittelten Energien zu bestimmen.

Unter Rückgriff auf die so unter c. und d. bestimmten Energien und deren nach e. bestimmten Verhältnis wird dann auf einen weichen Stimmeinsatz geschlossen, wenn in dem Zeitintervall das bei e. ermittelte Verhältnis der Energien zunächst von der Energie bei der Grundfrequenz dominiert wird und erst im weiteren Verlauf des vorgegebenen Zeitintervalls in einer Zeitspanne Δt das Verhältnis der Energien sich zugunsten der Energie(n) bei der/den harmonischen Vielfachen der Grundfrequenz verschiebt.

Hier wird also mit anderen Worten nicht auf die Lautstärke und deren Verlauf (entsprechend die Energie) des gesamten Sprachereignisses bei und nach dem Stimmeinsatz abgestellt, sondern es erfolgt eine detailliertere Betrachtung nach verschiedenen Anteilen des Stimmsignals.

Von den Erfindern aufgenommene und ausgewertete Daten zeigen in der Tat, dass der Lautstärkeverlauf nicht zu einer zufriedenstellenden Zuverlässigkeit der Klassifikation des Zielverhaltens weicher Stimmeinsatz führt.

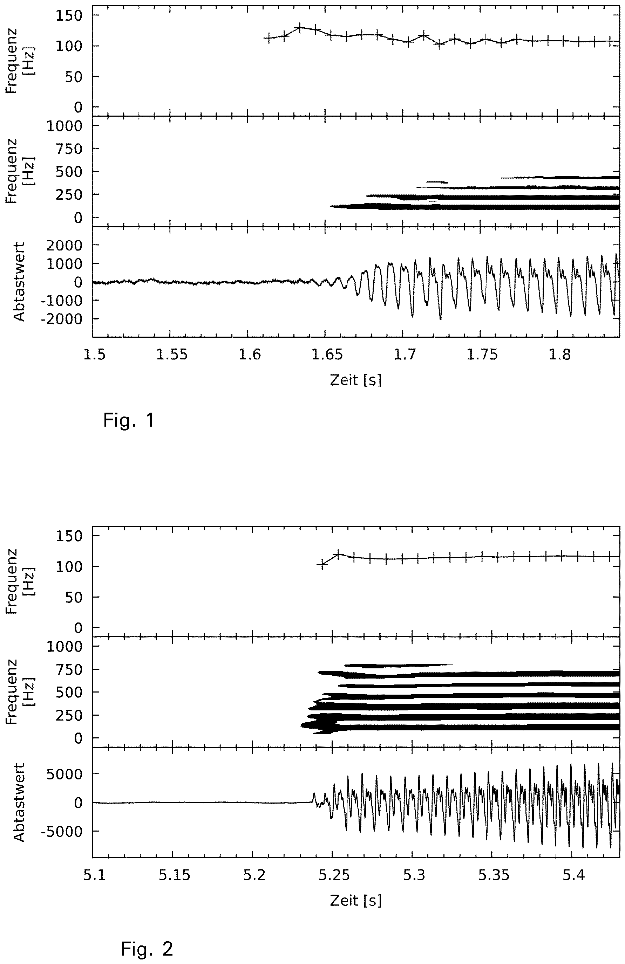

Das erfindungsgemäße Verfahren nutzt die nun die von den Erfindern gewonnene Erkenntnis aus, dass sich weiche Stimmeinsätze vor allem durch eine spezielle Stimmqualität zu Beginn des Sprachereignisses auszeichnen. Dadurch, dass die Amplitude der Stimmlippenschwingung sich bei einem weichen Stimmeinsatz erst langsam steigert, ist, wie die Erfinder erkannt haben, im Sprachsignal zunächst hauptsächlich die Grundfrequenz vertreten, ihre harmonischen Vielfachen hingegen sind kaum vorhanden. Das Sprachsignal ist mit dem Stimmeinsatz und in der ersten sich daran anschließenden Phase annähernde sinusförmig, wie dies in Fig. 1 gezeigt ist. Erst, wenn die Stimmlippenschwingungen ihr Maximum erreicht haben, liegt ein periodischer Stimmlippenverschluss vor und damit die Produktion der normalen Stimme mit ihren starken Anteilen von harmonischen Vielfachen.

Beim harten Stimmeinsatz hingegen initiiert die Lösung des vorangehenden Glottisverschlusses unmittelbar die normale Stimmgebung mit periodischem Glottisverschluss und der Anwesenheit von harmonischen Vielfachen der Grundfrequenz. Dies ist in Fig. 2 gezeigt. Dieser Aspekt der Stimmqualität wird mit Hilfe von geeigneten akustischen Parametern extrahiert, erfindungsgemäß über das Energieverhältnis der Schwingungsanteile bei der Grundfrequenz zu den Schwingungsanteilen bei den harmonischen Vielfachen in einem vorgegebenen Zeitintervall. Z.B. kann dieser Aspekt anhand des Verhältnisses der Energien der ersten Harmonischen (also der Grundfrequenz) und der zweiten harmonischen Vielfachen der Grundfrequenz, gemessen in den ersten 10 Millisekunden nach Stimmeinsatz beurteilt werden. Es ist also im Rahmen der Erfindung nicht zwingend erforderlich, die Energien sämtlicher harmonischer Vielfacher der Grundfrequenz zu betrachten. Da üblicherweise die Harmonischen niedrigerer Ordnung mit weitaus mehr Energie schwingen als die Harmonischen höherer Ordnung, kann es genügen, sich allein auf die Harmonischen niedrigerer Ordnung zu konzentrieren, z.B. eben auf die zweite Harmonische (doppelte Grundfrequenz).

Im Rahmen der Erfindung kann als Energie der Grundfrequenz Fo auch eine Summation der Energien im Bereich von 0,5^{∗}Fₒ bis 1,5^{∗}Fₒ angenommen werden, um so einem "Verwischen" der Frequenz und der bei dieser enthaltenen Energie Rechnung zu tragen. Die so ermittelte Energie bei der Grundfrequenz kann dann z.B. ins Verhältnis zu der in einem breiten, oberhalb der Grundfrequenz liegenden Frequenzband (z.B. der Energie im Bereich zwischen 50 und 4000 Hz) gesetzt werden, um aus der zeitlichen Entwicklung dieses Verhältnisses den Stimmeinsatz dann zu charakterisieren.

Für verschiedene Beispiele ergaben sich in Versuchen folgende Werte dieser Energieverhältnisse :
a. Verhältnis abgetastete Frequenz bei zweiten Harmonischer zu Grundfrequenz (Dezibel; gemittelt über die ersten 50 ms):
   - männlicher Sprecher, prototypisch weich: z.B. -19,1 oder -13,6; prototypisch hart z.B. 1,6 oder 3,7
   - weibliche Sprecherin, prototypisch weich: z.B. -15,8 oder -15,9; prototypisch hart z.B. 8,9 oder 11,2
   - Annotierte Stichprobe Übender: weich: -13,6 (Mittelwert) ± 12,1 (Standardabweichung); hart: -3,2 (Mittelwert) ± 15,7 (Standardabweichung)
   Zu erkennen ist, dass hier eine gute Unterscheidung zwischen weichen und harten Stimmeinsätzen aufgrund des Energieverhältnisses getroffen werden kann.
b. Verhältnis aufsummierter Energien von 0,5^{∗}F₀ bis 1,5^{∗}F₀ zu Rest im Frequenzbereich 50-4000 Hz (Dezibel; gemittelt über die ersten 50 ms):
   - männlicher Sprecher, prototypisch weich: 10,6 oder 9,8 ; prototypisch hart -6,0 oder -7,4
   - weibliche Sprecherin, prototypisch weich: 9,3 oder 10,9; prototypisch hart -9,4 oder -12,0
   - Übende: weich: 7,0 (Mittelwert) ± 9,9 (Standardabweichung); hart: -2,9 (Mittelwert) ± 12,4 (Standardabweichung).
   Auch hier ist gut die Differenzierung zu erkennen, die durch das erfindungsgemäße Vorgehen bei einer solchen Betrachtung der relevanten Energieverhältnisse erhalten werden kann.

Bei dem erfindungsgemäßen Vorgehen müssen zunächst im Signalverlauf des digitalen Sprachsignals Stimmeinsätze erkannt, also im zeitlichen Verlauf des Signals identifiziert und lokalisiert, werden. Hierzu kann das Sprachsignal mit Vorteil in stimmhafte und stimmlose Segmente unterteilt werden. Da die Unterscheidung "stimmhaft" zu "stimmlos" auf Grund lokaler Eigenschaften des Sprachsignals inhärent fehlerbehaftet ist, bietet es sich an, ein Verfahren zu benutzen, das globale Konsistenzbedingungen ausnutzt, um zu einer möglichst robusten Unterteilung zu gelangen. Dies kann z.B. von Algorithmen zur Extraktion des Verlaufs der Grundfrequenz geleistet werden. Man benötigt hier zunächst nur das "Nebenprodukt" der Unterteilung in stimmhafte/stimmlose Segmente.

Im Rahmen der Erfindung wird hierzu bevorzugt der RAPT-Algorithmus nach David Talkin (vergleiche D. Talkin, Speech Coding and Syntesis, Elsevier Science, 1995, vol. 495, S. 495-518, Kap. 14 A Robust Algorithm for Pitch Tracking (RAPT)) verwendet, welcher wegen der fehlenden harmonischen Vielfachen bei weichen Stimmeinsätzen besser zur präzisen Segmentierung geeignet ist als z.B. Algorithmen, die im Frequenzbereich arbeiten.

Um Fehlalarme zu minimieren, kann die Segmentierung noch mit Hilfe morphologischer Operatoren geglättet werden, wie dies z.B. durch H. Niemann in Klassifikation von Mustern, Verlag Springer 1983, 2nd Edition, verfügbar unter http://www5.cs.fau.de/filead min/Persons/NiemannHeinrich/klassifikation-vonmustern/m00-www.pdf, beschrieben ist. Neben dem Zeitpunkt des Stimmeinsatzes gibt die Segmentierung auch die Dauer der zugeordneten Phrase an.

Das Zeitintervall, in dem - gemessen ab dem Zeitpunkt des Stimmeinsatzes - zeitlich aufgelöst der Verlauf der Energien bei der Grundfrequenz (= erste Harmonische) und einer oder mehreren harmonischen Vielfachen bestimmt wird, kann insbesondere eine Länge von 7,5 bis 200 Millisekunden, vorzugsweise von 50 bis 100 Millisekunden aufweisen.

Auf einen weichen Stimmeinsatz kann insbesondere dann geschlossen werden, wenn die Zeitspanne Δt, innerhalb derer sich das Verhältnis der Energien zugunsten der Energie bei harmonischen Vielfachen der Grundfrequenz verschiebt, zwischen 50 und 100 Millisekunden liegt.

Die Bestimmung der Grundfrequenz kann, ebenso wie die Analyse der Spektren z.B. in Abständen von 5 bis 20 Millisekunden, insbesondere in Abständen von 10 Millisekunden erfolgen. Die regelmäßige Bestimmung der Grundfrequenz ist wichtig, da sich diese im Verlauf des Stimmeinsatzes ändern kann, in der Regel auch ändert, und das Verfahren für eine genaue Analyse auf die richtige Grundfrequenz Bezug nehmen muss.

Insgesamt stellt diese Methode zur Detektion von Stimmeinsätzen ein deutlich robusteres Vorgehen dar als rein auf Lautstärke basierende Methoden, wie sie bei den existierenden Verfahren eingesetzt werden. Ein weiterer Vorteil ist, dass keine Kalibrierung notwendig ist, wohingegen bei auf Lautstärke basierenden Verfahren immer ein Schwellwert eingestellt oder geschätzt werden muss.

Bei dem erfindungsgemäßen Verfahren kann auf eine Verwendung weiterer relevanter akustischer Parameter und die direkte Modellierung des Zielverhaltens zurückgegriffen werden. Dies kann die - durch das oben beschriebene Vorgehen bereits erreichte, hohe Zuverlässigkeit noch weiter steigern.

Dabei können, um möglichst alle relevanten Informationen im Sprachsignal auszunutzen und damit maximale Robustheit und Zuverlässigkeit zu erreichen, verschiedene akustische Parameter in einer Vielzahl von Varianten aus dem digitalen Sprachsignal abgeleitet und berechnet werden.

Die Abbildung entsprechend vieldimensionaler Parameterräume auf die zu erkennenden Klassen (weiche/harte Stimmeinsätze) erfolgt dann insbesondere mit Hilfe von datengetriebenen Verfahren anhand einer annotierten Stichprobe, typischerweise einer Sammlung von Stimmeinsätzen, die von Experten bewertet und klassifiziert wurden. Das Verfahren arbeitet dann vollständig automatisch. Weitere Parametergruppen, die betrachtet werden können, zielen ab auf die Entwicklung der Lautstärke (die im Stand der Technik als einziger Parameter berücksichtigt wird) und Spektrum dominierte Parameter, die sich insbesondere einer Betrachtung der Energien in verschiedenen Frequenzen und damit indirekt auch der Stimmqualität widmen. Ein beispielhaftes Vorgehen, das auch solche Parameter berücksichtigt, ist weiter unten stehend näher beschrieben.

Mit der Erfindung wird auch ein Datenverarbeitungsprogramm für die rechnergestützte, automatisierte Beurteilung einer Qualität eines Stimmeinsatzes eines Sprechenden bereitgestellt mit
a. einem Stimmeinsatzanalysemodul, das dazu eingerichtet ist, aus einem zeitlichen Verlauf eines aus einem akustischen Sprachsignal des Sprechenden gewonnenen digitalen Sprachsignals einen Zeitpunkt des Stimmeinsatzes des Sprechenden zu bestimmen,
b. einem Grundfrequenzermittlungsmodul, das dazu eingerichtet ist, eine Grundfrequenz des Sprachsignals zum Zeitpunkt des Stimmeinsatzes zu ermitteln,
c. einem Grundfrequenz-Energieermittlungsmodul, das dazu eingerichtet ist, aus dem digitalen Sprachsignal in einem vorgegebenen Zeitintervall ab dem Zeitpunkt des Stimmeinsatzes zeitlich aufgelöst den Verlauf der bei der Grundfrequenz in dem Sprachsignal enthaltenen Energie zu ermitteln;
d. einem Oberton-Energieermittlungsmodul, das dazu eingerichtet ist, aus dem digitalen Sprachsignal in dem vorgegebenen Zeitintervall zeitlich aufgelöst den Verlauf der bei harmonischen Vielfachen der Grundfrequenz in dem Sprachsignal enthaltenen Energie zu ermitteln;
e. einem Verhältnisbestimmungsmodul, das dazu eingerichtet ist, den zeitlichen Verlauf des Verhältnisses der von dem Grundfrequenz-Energieermittlungsmodul und dem Oberton-Energieermittlungsmodul ermittelten Energien zu bestimmen und auf einen weichen Stimmeinsatz zu schließen, wenn in dem Zeitintervall das Verhältnis der Energien zunächst von der Energie bei der Grundfrequenz dominiert wird, erst im weiteren Verlauf des vorgegebenen Zeitintervalls das Verhältnis der Energien sich zugunsten der Energien bei den harmonischen Vielfachen der Grundfrequenz verschiebt.

Mit einem solchen Datenverarbeitungsprogramm kann das vorstehend beschriebene Verfahren auf einer rechnergestützten Datenverarbeitungsgeräte durchgeführt werden.

Das Datenverarbeitungsprogramm kann insbesondere und mit Vorteil auch ein Digitalisierungsmodul zum Erzeugen des digitalen Sprachsignals aus dem akustischen Sprachsignal enthalten.

Das Stimmeinsatzmodul kann mit Vorteil für die Bestimmung des Zeitpunktes des Stimmeinsatzes einen RAPT-Algorithmus nach David Talkin verwenden, wie er vorstehend näher bezeichnet ist.

Insbesondere kann das Datenverarbeitungsprogramm als Anwendungssoftware (sog. App) für ein mobiles Endgerät, wie insbesondere ein Smartphone oder einen Tablet-Computer, ausgebildet sein.

Weiterhin wird mit der Erfindung ein rechnergestütztes Datenverarbeitungsgerät angegeben, das ein Datenverarbeitungsprogramm wie oben beschrieben enthält. Das Datenverarbeitungsprogramm ist dabei insbesondere auf dem Datenverarbeitungsgerät betriebsbereit installiert.

Mit Vorteil kann das Datenverarbeitungsgerät einen Eingang zur Aufnahme eines akustischen Sprachsignals aufweisen. Ein solcher Eingang kann z.B. ein Mikrophon sein. Alternativ kann aber auch eine Aufnahmekomponente an das Datenverarbeitungsgerät angeschlossen werden, in dem bereits eine Digitalisierung des akustischen Sprachsignals erfolgt und das dann das digitale Sprachsignal in hoher Auflösung an das Datenverarbeitungsgerät überträgt (entweder kabelgebunden oder drahtlos, z.B. über eine Schnittstelle nach dem Bluetooth-Standard). Eine solche Aufnahmekomponente kann z.B. durch das Mikrophon eines Headsets gebildet sein.

Das Datenverarbeitungsgerät kann insbesondere als mobiles Endgerät, z.B. als Smartphone oder Tablet-Computer, ausgebildet sein.

Nachfolgend wird - auch unter Verweis auf die beigefügten Figuren - eine mögliche Ausführungsform eines erfindungsgemäßen Verfahrens noch einmal ausführlicher beschrieben und erläutert.

Dabei zeigen in den beigefügten Abbildungen:
- Fig. 1: eine Stimmanalyse im Falle eines weichen Stimmeinsatzes. Dabei ist oben mit durch Linien verbundenen Kreuzen der mit dem RAPT-Algorithmus nach David Talkin extrahierte Verlauf der Grundfrequenz aufgezeigt, wobei der Verlauf der Grundfrequenz zudem den Zeitpunkt des Stimmeinsatzes bei ca. t = 1,61 s angibt. Die mittlere Darstellung zeigt ein binarisiertes Spektrogramm (Pixel geschwärzt, wenn Stärke einer Frequenz zum jeweiligen Zeitpunkt größer als ein Schwellwert, hier - 25 dB). Die Grundfrequenz und ihre harmonischen Vielfachen sind dort als parallele horizontale Linien zu erkennen. Es ist zu erkennen, dass die unterste Linie, die die Grundfrequenz zeigt, zunächst isoliert ist und erst im weiteren Verlauf (ab ca. t = 1,68 s) von ihren harmonischen Vielfachen begleitet wird. Unten ist das Sprachsignal an sich dargestellt. Zu Beginn des Stimmeinsatzes bei ca. t = 1,65 sec liegt näherungsweise eine einfache Sinusschwingung vor.
- Fig. 2: in einer der Fig. 1 vergleichbaren Darstellung mit den Darstellungen Verlauf Grundfrequenz nach RAPT-Algorithmus (oben), Spektrogramm (Mitte) und Sprachsignal (unten) eine Stimmanalyse im Falle eines harten Stimmeinsatzes. Der Zeitpunkt des Stimmeinsatzes liegt hier bei ca. t = 5,24 sec. Im Spektrogramm ist zu erkennen, dass hier im Unterschied zu dem in Fig. 1 gezeigten Fall des weichen Stimmeinsatzes die harmonischen Vielfachen praktisch gleichzeitig mit der Grundfrequenz einsetzen. Auch im Sprachsignal ist zu erkennen, dass direkt mit dem Einsatz die komplexe (nicht nur sinusförmige) Schwingung einsetzt.

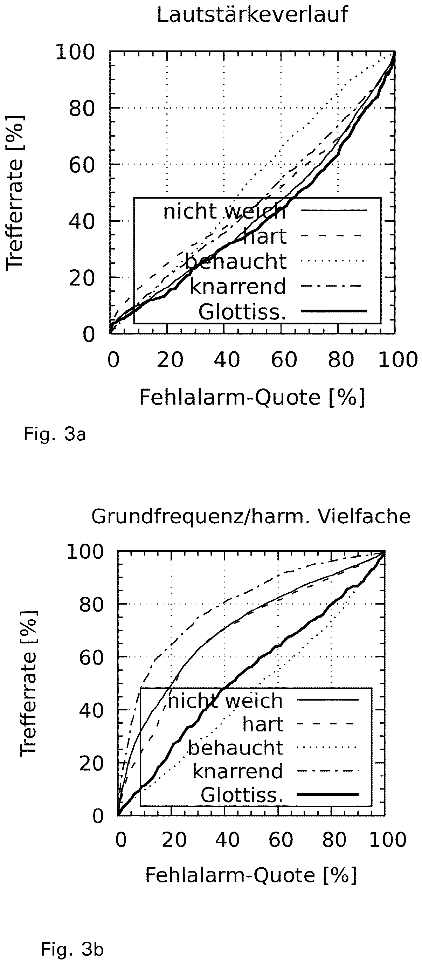

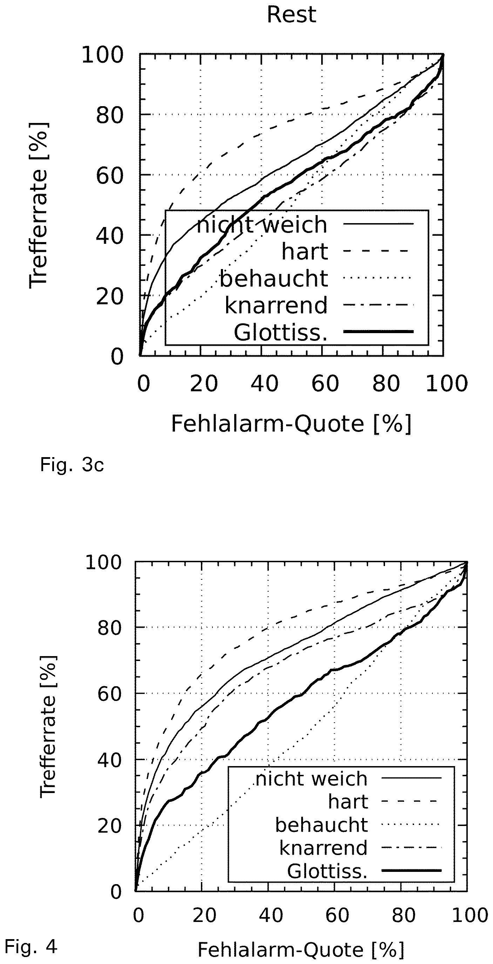

- Fig. 3a-c: je eine Receiver-Operator-Characteristic-Kurve eines nach einem automatischen, softwaregesteuerten System arbeitenden Verfahrens für verschiedene Untermengen von Merkmalen. (Je weiter links oben die Kurve verläuft, desto besser. Die erste Winkelhalbierende (Fehlalarm =Trefferquote) entspricht der Zufalls-Basislinie.) Die Darstellung in Fig. 3a zeigt eine Auswertung rein nach der Lautstärke, wie dies im Stand der Technik erfolgt. Die Darstellung in Fig. 3b zeigt eine auf die erfindungsgemäß auf jeden Fall vorzusehende Analyse des Energieverhältnisses von Grundfrequenz zu harmonischer / harmonischen Vielfachen beschränkte Auswertung. Fig. 3c zeigt eine Analyse nach anderen Kriterien als Lautstärke und Energieverhältnis von Grundfrequenz zu harmonischer / harmonischen Vielfachen und belegt, dass auch weitere Parameter in der Auswertung einen (zusätzlichen) Einfluss auf die Qualität der Analyse haben können. Gleichwohl zeigt Fig. 3b, dass der Einfluss des Parameters "Energieverhältnis von Grundfrequenz zu harmonischer / harmonischen Vielfachen" besonders ausgeprägt ist und eine besonders gute Beurteilung der Qualität des Stimmeinsatzes ermöglicht. AUC (Area under the Curve; 0,5 = Zufalls-Basislinie, 1 = perfekt): Lautstärke (Fig. 3a): 0,424; 0,466; 0,525; 0,464; 0,403; Grundfrequenz/harmonische Vielfache (Fig. 3b): 0,704; 0,688; 0,466; 0,792; 0,530; Rest (Fig. 3c): 0,634; 0,736; 0,512; 0,518; 0,552.
- Fig. 4: eine Reveiver-Operator-Characteristic-Kurve für die Erkennung verschiedener Fehlerarten versus weicher Einsätze basierend auf einer Version des erfindungsgemäßen Verfahrens, bei der der Vergleich der Energien Grundfrequenz / harmonische Vielfache um die Auswertung weiterer Parameter für die Erkennung eines weichen Stimmeinsatzes ergänzt worden ist (Es handelt sich um die Vereinigungsmenge der in Fig. 3a-c betrachteten Untermengen von Merkmalen). AUC: 0,725; 0,780; 0,481; 0,675; 0.573.

Für die Durchführung des erfindungsgemäßen Verfahrens kann in einer Ausführungsvariante wie nachstehend beschrieben vorgegangen werden.

### 1. Segmentierung

Zunächst werden alle Stimmeinsätze einer Äußerung identifiziert und lokalisiert. Hierzu wird das Sprachsignal in stimmhafte und stimmlose Segmente unterteilt. Hierzu wird der RAPT-Algorithmus nach David Talkin verwendet. Dabei wird angenommen, dass die Grundfrequenz mindestens 50 Hz und höchstens 500 Hz beträgt. Um Fehlalarme zu minimieren, wird die Segmentierung noch mit Hilfe morphologischer Operatoren geglättet (Schließung mit 0,1 s, Öffnung mit 0,25 s, zuletzt Schließung mit 0,5 s). Neben dem Zeitpunkt des Stimmeinsatzes gibt die Segmentierung auch die Dauer der zugeordneten Phrase an.

### 2. Merkmalsberechnung

### 2.1. Basismerkmale

Es werden zunächst Eigenschaften des Sprachsignals extrahiert, die später die Grundlage von mehreren akustischen Parametern bilden. Diese sind:
**Lautstärke:** Für Kurzzeit-Analysefenster (Länge 40 Millisekunden, Schrittweite 10 Millisekunden, von-Hann-Fenster) wird die instantane Lautstärke über die Zeit hinweg aus der (logarithmierten) Energie des Signals berechnet. Vorher wird der Mittelwert des Signals subtrahiert, um einen eventuellen Offset kostengünstiger und entsprechend minderqualitativer Aufnahmehardware auszugleichen.
**Pseudo-periodensynchrone Laustärke:** Um die Lautstärke des Sprachsignals möglichst lokal (unabhängig von benachbarten, möglicherweise wesentlich leiseren oder lauteren Schwingungsperioden) zu berechnen, wird das Analysefenster entsprechend der - vorzugsweise mit dem RAPT-Algorithmus - extrahierten Grundfrequenz angepasst (doppelte Periodendauer, von-Hann-Fenster). Aktuelle Grundfrequenz ist F₀; dann ist die Dauer des Analysefensters 2/F₀. Dies entspricht bei einer Abtastrate des Sprachsignals von Fₛ (alle Sprachsignale werden auf Fₛ = 16 kHz heruntergesampelt) folgender Anzahl von Abtastwerten: Gerundeter Wert von 2Fₛ/F₀.
**Kurzzeitspektrum:** Das (logarithmierte) Betragsquadratsspektrum wird aus Analysefenstern mit 25 ms Breite und unter 10 ms Schrittweite und dem von-Hann-Fenster berechnet.
   Die diskrete Fourier-Transformation (DFT) wird berechnet mit Hilfe der schnellen Fourier-Transformation (FFT). Um die Frequenzauflösung zu erhöhen, wird mit Nullen aufgefüllt, so dass sich 2048 Eingangswerte ergeben. Es werden Standard-Programmbibliotheken zur Berechnung verwendet.
**Pseudo-periodensynchrones Kurzzeitspektrum:** Für den Erhalt eines möglichst lokalen Spektrums wird das Analysefenster angepasst an die extrahierte Grundfrequenz (vierfache Periodendauer). Dauer des Analysefensters 4/Fₒ, d.h. mit dem gerundeten Wert von 4Fₛ/Fₒ Abtastwerten.
**Kurzzeitspektrum aus normierter Kreuzkorrelation:** Um ein Frequenzspektrum zu berechnen, das exakt der Information entspricht, die der vorzugsweise verwendete RAPT-Algorithmus zur Extraktion der Grundfrequenz verwendet hat, wird das Frequenzspektrum direkt aus der normierten Kreuzkorrelation berechnet. Dabei wird eine Methode zur Berechnung des Kurzzeitspektrums aus der Autokorrelationsfunktion modifiziert, indem statt der Autokorrelation die normierte Kreuzkorrelation verwendet wird. Es wird also das Betragsquadratspektrum aus dem Betrag der DFT der Kreuzkorrelation berechnet. Dies ermöglicht eine besonders präzise Berechnung der Energie der verschiedenen harmonischen Vielfachen der Grundfrequenz. Für die Kreuzkorrelation wird wie beim RAPT-Algorithmus die Fensterbreite 7,5 ms, und die Gesamtbreite entsprechend der minimal angenommenen Grundfrequenz (50 Hz) verwendet. Um die Frequenzauflösung zu erhöhen, wird vor der DFT mit Nullen aufgefüllt, so dass sich 2048 Eingangswerte ergeben.

### 2.2. Merkmale

Im Folgenden werden die für die Durchführung des Verfahrens in der hier beschriebenen Variante verwendeten 908 berechneten Merkmale (akustische Parameter, die zur Klassifikation eingesetzt werden) aufgeführt. Dabei ist zu beachten, dass nicht notwendigerweise alle der aufgeführten Merkmale nötig für den Erfolg des Verfahrens sind. Erfindungsgemäß wird aber jedenfalls auf das Merkmal "Grundfrequenz/harmonische Vielfache" abgestellt. In einer - nicht unter die hier beanspruchte Erfindung fallenden, gleichwohl eine eigenständige Erfindung darstellenden - Variante des Verfahrens können aber auch andere Merkmale unter Ausschluss des Merkmals "Grundfrequenz/harmonische Vielfache" herangezogen und kombiniert werden.

Weitere Merkmale können, müssen aber nicht herangezogen werden. Es ist dabei schwierig, empirisch festzustellen, welche aus einer gegebenen Menge von weiteren Merkmalen tatsächlich notwendig sind. Deshalb ist es in der Mustererkennung üblich, viele potentiell relevante Merkmale zu verwenden, und es einem datengetriebenen Verfahren zu überlassen, die Gewichtung der einzelnen Merkmale vorzunehmen. Dies führt - moderne, robuste Klassifikationsverfahren vorausgesetzt - erfahrungsgemäß zu einem zuverlässigeren Klassifikationssystem als die manuelle Auswahl einiger weniger vielversprechender Parameter.

Wenn nachstehend von Intervallen gesprochen wird und dazu Zeitangaben gemacht werden, so bezieht sich die Zeitangabe "0 ms" auf den Zeitpunkt des (mit dem RAPT-Algorithmus) ermittelten Stimmeinsatzes.

Rauschen: Die Berechnung der meisten Merkmale wird in einem gewissen Maß durch Hintergrundrauschen beeinflusst. Um dem Klassifikationssystem die Möglichkeit zu geben, dies auszugleichen, werden Merkmale verwendet, die die Lautstärke des Rauschens beschreiben. Die Lautstärke des Rauschens wird zunächst geschätzt als das Minimum der Lautstärke, (nach Logarithmierung) geglättet mit einem 50 ms-Rechteckfenster. Um Unabhängigkeit von der Aussteuerung eines Aufnahmemikrofons zu erreichen, wird normiert mit der geschätzten Sprechlautstärke, berechnet als Mittelwert vor oder nach Logarithmierung, oder als Median der Lautstärke in stimmhaften Segmenten. (Es ergeben sich so drei Merkmale.)

**Lautstärke des Einsatzes:** Die Lautstärke während eines Intervalls zum Beginn des Einsatzes wird in verschiedenen Varianten als Merkmal verwendet. (Intervall-Längen: 10 ms, 50 ms, 100 ms oder 200 ms; Lautstärke: unabhängig von stimmhaft/stimmlos, nur stimmhaft oder pseudo-periodensynchron; drei verschiedene Normierungen wie oben; es ergeben sich 4x3x3 = 36 Merkmale).

**Lautstärke des unmittelbaren Einsatzes:** Lautstärke zum Zeitpunkt des Einsatzes, in verschiedenen Varianten (normiert mit den drei geschätzten Sprechlautstärken, oder der Lautstärke während der ersten 50 ms, 100 ms oder 200 ms; es ergeben sich sechs Merkmale).

**Amplitude:** Lautstärkeveränderung während der ganzen Phrase (Maximum/Minimum, 99%/1%-Quantil, 95%/5%-Quantil, 90%/10%-Quantil; Lautstärke: unabhängig von stimmhaft/stimmhaft, nur stimmhaft oder pseudoperiodensynchron 4x3 = 12 Merkmale).

**lokale Amplitude:** Lautstärkeveränderung am Anfang des Einsatzes (Intervalle: 0 bis 50 ms, 0 bis 100 ms, 0 bis 200 ms, 10 bis 50 ms, 10 bis 100 ms, 10 bis 200 ms, 50 bis 100 ms, 100 bis 200 ms; Lautstärke: unabhängig von stimmhaft/stimmhaft, nur stimmhaft oder pseudoperiodensynchron; es ergeben sich 8x3 = 24 Merkmale).

**Steigung der Lautstärke:** Anstieg der Regressionsgeraden am Anfang des Einsatzes (Intervalle und Lautstärken wie oben; es ergeben sich 24 Merkmale).

**Absinken der Lautstärke:** Es wird akkumuliert, ob, bzw. wie stark die Lautstärke zu Beginn des Einsatzes lokal absinkt (Bei monotonem Anstieg resultiert 0. Intervalle: 50 ms, 100 ms, 200 ms; drei verschiedene Lautstärken wie oben; es ergeben sich 3x3=9 Merkmale).

**Grundfrequenz/harmonische Vielfache:** Um den entscheidenden Unterschied in der Stimmqualität zwischen weichen und harten Einsätzen abzubilden, wird die relative Energie der Grundfrequenz in verschiedenen Varianten berechnet. (Kurzzeitspektrum, pseudoperiodensynchrones Kurzzeitspektrum, oder Kurzzeitspektrum aus normierter Kreuzkorrelation; Berechnung der Energie aus einem einzigen Frequenz-Wert (Index des DFT-Koeffizienten: gerundeter Wert von F₀ x 2048/Fₛ) oder aufakkumuliert (symmetrisches Frequenzinterval, Breite = Grundfrequenz: Es werden die Absolutwerte der DFT-Koeffizenten von (gerundet) Index 0,5 x F₀ x 2048/Fₛ bis (gerundet) Index 1,5 x F₀ x 2048/Fₛ vor der Logarithmierung aufaddiert); Normierung durch Energie der 2. harmonischen Vielfachen (Berechnungs-Variante wie bei Grundfrequenz) oder durch Gesamtenergie in 50 bis 4000,Hz; Intervalle: 0 bis 10 ms, 0 bis 50 ms, 0 bis 100 ms, 0 bis 200 ms, 10 bis 50 ms, 10 bis 100 ms, 10 bis 200 ms, ganze Phrase, 200 ms bis PhrasenEnde; Akkumulierung: Mittelwert oder Median, es ergeben sich 3 x 2 x 2 x 9 x 2 = 216 Merkmale).

**Grundfrequenz:** Um dem Klassifikationssystem die Möglichkeit zu geben, von der Grundfrequenz abhänge Einflüsse auszugleichen, werden Mittelwert und Median der (logarithmierten) Grundfrequenz verwendet (es ergeben sich 2 Merkmale).

**Variabilität der Lautstärke:** Um knarrende Stimmanteile zu charakterisieren, werden verschiedene Maße der Variabilität der Lautstärke berechnet (Intervalle: 0 bis 50 ms, 0 bis 100 ms, 0 bis 200 ms, ganze Phrase, 200 ms bis Phrasenende; Lautstärke: nur stimmhaft oder pseudoperiodensynchron; Maße: Standardabweichung, Fehler der Regressionsgeraden, paarweiser Variabilitätsindex, mittlere absolute Beschleunigung, es ergeben sich 5 x 2 x 4 = 40 Merkmale;
für Lautstärke unabhängig von stimmhaft/stimmhaft die -100 bis 0 ms, 0 bis 50 ms, 0 bis 100 ms, 0 bis 200 ms, ganze Phrase, 200 ms bis Phrasenende; es ergeben sich 6 x 4 = 24 Merkmale).

**Variabilität stimmhaft/stimmlos:** Ebenfalls für knarrende Stimmanteile wird charakterisiert, wie oft die Stimme zwischendurch wegbricht, d.h. ein stimmloses Sprachsignal vorliegt (Anteil der stimmhaften Analysefenster über die Intervalle - 100 bis 0 ms, 0 bis 50 ms, 0 bis 100 ms, 0 bis 200 ms, ganze Phrase, 200 ms bis Phrasenende; es ergeben sich 6 Merkmale).

**Harmonizität:** Zur weiteren Charakterisierung der Stimmqualität werden Maße der Harmonizität berechnet (Intervalle 0 bis 10 ms, 0 bis 50 ms, 0 bis 100 ms, 0 bis 200 ms, ganze Phrase, 200 ms bis Phrasenende; wird nur gezählt wenn stimmhaft; Harmonizität aus Kreuzkorrelation c entsprechend der Grundfrequenz: log((c + 0,1) / (1,0001 - c)); es ergeben sich 6 Merkmale).

**Spektrale Merkmale 1:** Zur weiteren Charakterisierung der Stimmqualität oder des gesprochenen Lautes werden Energien in Frequenzbändern hinzugenommen (24 Mel-Bänder, logarithmiert; normiert mit Mittelwert (nach Logarithmierung) über stimmhafte Segmente; gemittelt über die Intervalle 0 bis 10 ms, 0 bis 50 ms, 0 bis 100 ms, 0 bis 200 ms, 10 bis 50 ms, 10 bis 100 ms, 10 bis 200 ms; es ergeben sich 24 x 7 = 168 Merkmale.)

Mel-Bänder fallen als Zwischenergebnis bei der Berechnung der Standard-Spracherkennungs-Merkmale an, siehe unten und auch etwa http://siggigue.github.io/pyfilterbank/melbank.html. Es handelt sich um die (vor Logarithmierung) aufsummierten Energien, gewichtet mit Dreiecksfiltern, die einer gehörorientierten Skala gehorchen.

**Spektrale Merkmale 2:** Zur weiteren Charakterisierung der Stimmqualität oder des gesprochenen Lautes werden die Standard-Kurzzeit-Merkmale eines Spracherkennungssystems (Mel-Frequency Cepstral Coefficients (MFCC, s. S. B. Davis and P. Mermelstein, Comparison of parametric representation for monosyllabic word recognition in continuously spoken sentences, IEEE Transactions on A-coustics, Speech and Signal Processing, vol. 28, no. 4, pp. 357-366, 1980.) verwendet; 13 MFCC aus 24 Mel-Bändern; normiert mit Mittelwert über stimmhafte Segmente; Intervalle wie oben; es ergeben sich 13 x 7 = 91 Merkmale).

**Spektrale Merkmale 3:** Spektrale Merkmale 1 +2 zum unmittelbaren Zeitpunkt des Einsatzes; es ergeben sich 24 + 13 = 37 Merkmale.

**Lautstärke vor Einsatz:** Zur Modellierung einer hörbaren Behauchung (welche nach dem Zielverhalten bei Fluency Shaping vermieden werden sollte) wird die Lautstärke vor dem Einsatz charakterisiert (Intervalle: 100 ms vor Einsatz oder bis zu 200 ms (hängt von verfügbarer Zeit vor Einsatz ab); Normierungen wie bei Lautstärke des unmittelbaren Einsatzes; es ergeben sich 2 x 6 = 12 Merkmale).

**Spektrum vor Einsatz:** Zum gleichen Zweck werden Energien der Mel-Frequenzbändern vor dem Einsatz hinzugenommen (zwei Intervalle wie oben; Normierungen: alle stimmhaften Segmente, oder Mittelwert der ersten 50, 100, oder 200 ms nach Einsatz; es ergeben sich 2 x 4 x 24 = 192 Merkmale).

### 3. Klassifikation

Die Abbildung von dem 908-dimensionalen Merkmalvektor auf die Zielklasse (z.B. weicher/harter Einsatz) wird mit Hilfe von Support-Vektor-Maschinen durchgeführt. Dieses datengetriebene Verfahren zeichnet sich durch hervorragende Leistung auch bei hochdimensionalen Eingangsdaten aus. Um mit diesem binären Klassifikationsverfahren ein Mehrklassenproblem zu lösen, wird das Schema "einer-gegen-Rest" angewendet. Alle Merkmale werden zunächst einzeln auf Standardabweichung 1 normiert; danach wird die durchschnittliche euklidische Länge eines Merkmalvektors auf 1 normiert. Dadurch kann der Metaparameter C sehr einfach gewählt werden (konstant auf C = 0,001). Es wird eine lineare Kernelfunktion verwendet. Zur präzisen Schätzung von Klassenwahrscheinlichkeiten werden die Ausgaben der Entscheidungsfunktionen geeignet transformiert.

Grundlage der Support-Vektor-Maschinen ist die Lösung eines nichtlinearen Optimierungsproblems, die sich in der Anwendung durch besondere Robustheit in der Klassifikation auszeichnet. Eingangsdaten sind die Annotation und die Merkmale der Trainingssprecher. Durch die verwendete lineare Kernelfunktion läuft die Klassifikations-Phase auf eine einfache affin lineare Funktion der Merkmale hinaus. Es werden Standard-Programmbibliotheken zur Berechnung verwendet.

Die Resultate werden für Zwecke der Schätzung der Wahrscheinlichkeit durch eine Sigmoid-Funktion transformiert, siehe http://scikit-learn.org/stable/modules/calibration.html. Auch hier werden Standard-Programmbibliotheken zur Berechnung verwendet.

### 4. Daten

Im Rahmen von regulären Kursen der KST wurden Sprachaufnahmen von Stotternden gesammelt. Die Sprecher sollten dabei verschiedene Übungen sprechen: gehaltene Vokale, einzelne Silben, ein-, zwei- und dreisilbige Wörter, und schließlich kurze und lange Sätze. Zur Digitalisierung wurden kostengünstige Headsets verwendet.

Es liegen 3586 Aufnahmen von 16 weiblichen und 49 männlichen Sprechern im Umfang von insgesamt 5,0 Stunden vor. Alle Sprecher sind deutsche Muttersprachler.

### 4.1. Annotation

Das Material wurde von fünf Therapeuten dahingehend annotiert, wie gut verschiedene Aspekte des Zielverhaltens beim Fluency Shaping jeweils realisiert wurden. Hier interessieren nur die Annotationen zum Stimmeinsatz, der jeweils mit "gut" (d. h. weich), "hart", "behaucht", "knarrend", oder "mit Glottisschlag behaftet" bewertet wurde. Das Material wurde in zufälliger Reihenfolge präsentiert; pro Aufnahme liegen im Schnitt Annotationen von 2,8 Therapeuten vor (d.h. nicht jeder Therapeut hat alle Aufnahmen bewertet).

### 4.1.1. Inter-Rater-Übereinstimmung

Um die Wohldefiniertheit der Kriterien (bzw. die Schwierigkeit der Annotationsaufgabe) zu beurteilen, wurde betrachtet, wie gut die Annotationen der einzelnen Therapeuten übereinstimmen. Es wurde paarweise Übereinstimmung verwendet, d. h. es wurde jeweils ein Therapeut mit einem anderen verglichen. Dabei ist zu beachten, dass dies eine pessimistische Einschätzung der Qualität ist, da dem ersten Therapeuten teilweise die Fehler des anderen als vermeintliche Fehler angerechnet werden.

Tabelle 1 zeigt die Verwechslungsmatrix für Vokaleinsätze. Die Erkennung der einzelnen Fehlerarten lässt sich auch mit Hilfe von Trefferquote und Fehlalarmen charakterisieren. Diese sind in Tabelle 2 zusammengefasst. Zusammenfassend lässt sich sagen, dass die Kriterien sich als durchaus wohldefiniert darstellen, da die Übereinstimmung hoch überzufällig ist. Beispielsweise ist die Trefferquote "nicht weich gegenüber weich" mit 71.5% bei 22.7% Fehlalarm (siehe Tabelle 2) wesentlich höher als die hier zu erwartende zufällige Übereinstimmung von 22.7%.

**Tabelle 1: Verwechslungsmatrix für die Annotation von Vokaleinsätzen beim paarweisen Vergleich von Therapeuten. Da dabei jeder der 1472 Einsätze doppelt gezählt wird, ergeben sich insgesamt 1638 + 470 + 203 + 565 + 68 = 2944 = 1472 x 2 Fälle.**

| Annotierer 1 | # Fälle | Annotierer 2 [%] | | | | |
|---|---|---|---|---|---|---|
| | | weich | hart | behaucht | knarrend | Glottisschlag |
| weich | 1638 | 77,3 | 7,1 | 6,6 | 6,9 | 2,1 |
| hart | 470 | 24,7 | 37,4 | 2,6 | 31,1 | 4,0 |
| behaucht | 203 | 53,2 | 5,9 | 28,6 | 10,8 | 1,5 |
| knarrend | 565 | 20,0 | 26,0 | 3,9 | 49,6 | 0,5 |
| Glottisschlag | 68 | 51,5 | 27,9 | 4,4 | 4,4 | 11,8 |

**Tabelle 2: Trefferquote/Fehlalarm in % für die Erkennung verschiedener Fehlerarten beim Stimmeinsatz (Vokaleinsätze; paarweiser Vergleich von Therapeuten).**

| | nicht weich | hart | behaucht | knarrend | Glottisschlag |
|---|---|---|---|---|---|
| vs. weich | 71,5 @ 22,7 | 37,4 @ 7,1 | 28,6 @ 6,6 | 49,6 @ 6,9 | 11,8 @ 2,1 |

### 4.2. Gestellte Daten

Zusätzlich sprachen Therapeuten (sechs weibliche, ein männlicher Sprecher; alle deutsche Muttersprachler) Teile des Materials noch in zwei Varianten ein, einmal in normaler Sprache, und einmal in der gebundenen, weichen Sprechtechnik von Fluency Shaping. Hier liegen 5338 Aufnahmen im Umfang von insgesamt 4,7 Stunden vor.

Unter der vereinfachenden Annahme, dass dadurch entsprechende harte und weiche Stimmeinsätze generiert wurden, wurde darauf verzichtet, diesen Teil des Materials zu annotieren. Dies wurde durch eine stichprobenartige Durchsicht des Materials zumindest für Stimmeinsätze mit Vokalen bestätigt. Im Gegensatz zu obigen Daten von Stotternden, wo viele Grenzfälle enthalten sind, liegt bei diesem gestellten Material jeweils eine deutliche, prototypische Ausprägung der Eigenschaft "weicher" oder "harter" Stimmeinsatz vor.

### 5. Experimente und Ergebnisse

Die zu erwartende Zuverlässigkeit des automatischen Systems zur Klassifikation von Stimmeinsätzen wurde experimentell geschätzt. Hierzu wird jeweils mit einem Teil der Sprecher trainiert und mit den restlichen Sprechern getestet (d. h. die Parameter des Klassifikationssystems werden mit Hilfe der annotierten Sprecher in der Trainingsmenge geschätzt, und die Genauigkeit wird mit Hilfe der annotierten Sprecher in der Testmenge gemessen). Insgesamt erhält man einen konservativen Schätzwert der Genauigkeit des endgültigen Systems, welches unter Zuhilfenahme aller Sprecher trainiert wird. Es wird eine zweifache Kreuzvalidierung verwendet; die Ergebnisse werden über 10 Durchläufe mit verschiedenen Sortierungen von Trainings- und Testsprechern gemittelt. Beim Training wird eine innere Kreuzvalidierung (ebenfalls sprecherunabhängig, ebenfalls zweifach) verwendet für die Kalibrierung der Wahrscheinlichkeiten. Liegen für einen Einsatz mehrere Annotationen vor, werden alle konkurrierend verwendet (sowohl in Training als auch Test). Dadurch ist die sich ergebende Genauigkeit direkt vergleichbar mit der Inter-Rater-Übereinstimmung aus Abschnitt 4.1.1 und ebenfalls pessimistisch (weil auch dem System teilweise die Fehler von Therapeuten als vermeintliche Fehler angerechnet werden).

Es werden nur Vokaleinsätze ausgewertet. Es werden nur Aufnahmen ausgewertet, bei denen die Anzahl der automatisch segmentierten Phrasen (siehe Abschnitt 1) übereinstimmt mit der Annotation der Therapeuten. (Grund: aus Aufwandsgründen wurde auf eine manuelle Segmentierung des Materials verzichtet; durch die beschriebene Vorgehensweise ist eine näherungsweise, einfache Zuordnung der automatisch und manuell segmentierten Phrasen durch den Index der jeweiligen Phrase möglich.) Das Klassifikationssystem gibt Wahrscheinlichkeiten für die verschiedenen Stimmeinsätze aus. Je nachdem, ab welcher Wahrscheinlichkeit man einen Aussprachefehler zurückmeldet, ergibt sich ein strengeres System (mit höherer Trefferquote aber auch höherer Fehlalarm-Quote) oder ein vorsichtigeres System (niedrigere Trefferquote aber auch weniger Fehlalarm). Dies kann man in einer sogenannten Receiver-Operating-Characteristic-Kurve (ROC-Kurve) darstellen.

### 5.1. Unzulänglichkeit von Lautstärke

Um die Hypothese der Unzulänglichkeit der Verwendung allein der Lautstärke als Klassifikationskriterium für die Beurteilung von Stimmeinsätzen, insbesondere für deren Klassifizierung als "weich" zu verifizieren, wurde die Zuverlässigkeit des Klassifikationssystems bei Verwendung verschiedener Untermengen der Merkmale aus Abschnitt 2.2 untersucht:
Lautstärkeverlauf: Amplitude, lokale Amplitude, Lautstärke des Einsatzes, Lautstärke des unmittelbaren Einsatzes und Steigung der Lautstärke (102 Merkmale); Grundfrequenz/harmonische Vielfache (216 Merkmale);
Rest: Rauschen, Absinken der Lautstärke, Grundfrequenz, Variabilität der Lautstärke, Variabilität stimmhaft/stimmlos, Harmonizität, Spektrale Merkmale 1-3, Lautstärke vor Einsatz, und Spektrum vor Einsatz (590 Merkmale).

Die Ergebnisse finden sich in Fig. 3 in den Darstellungen a bis c. Für allein auf dem Lautstärkeverlauf basierende Merkmale ergibt sich keine gute Erkennungsleistung: Beispielsweise ist die Area under the Curve (AUC) für "weich" versus "nicht weich" mit 0,424 sogar kleiner als der Wert der Zufalls-Basislinie von 0,5.

Dass dies nicht etwa an einer unterschiedlichen Berechnung der Lautstärke-Parametern liegt, sondern an der Schwierigkeit der Aufgabe, zeigen Experimente mit den prototypischen Aufnahmen der Therapeuten (Abschnitt 4.2): Wenn das System auf diesen getestet wird, ergeben sich schon mit Lautstärke sehr gute Ergebnisse. Beispielsweise ergibt sich für "weich" versus "nicht weich" eine AUC von 0,906 (mit allen Merkmalen ergibt sich die noch weit bessere Zahl von 0,973).

Nur wenn die weiteren Merkmale verwendet werden, ergeben sich auch auf den realistischen Daten von Stotternden gute Ergebnisse. Hierbei ist zu bemerken (siehe Fig. 3b), dass die auf der Grundfrequenz bzw. harmonischen Vielfachen basierenden, erfindungsgemäß jedenfalls zu verwendenden Analysen besonders gut für die Erkennung knarrender Einsätze geeignet sind, und die restlichen (siehe Fig. 3c) für die Erkennung harter Einsätze. Zu erkennen ist aber auch, dass bereits eine Reduktion der betrachteten Parameter auf die erfindungsgemäß hergenommenen Energiewerte von Grundfrequenz und harmonischen Vielfachen beim Stimmeinsatz eine gegenüber der bloßen Lautstärkebetrachtung signifikante Verbesserung des Erkennungsverhaltens eines mit diesen Parametern und Vorgaben durchgeführten Verfahrens ergibt. Die Vorteile der jeweiligen Parametergruppen kombinieren sich im System mit allen Merkmalen (siehe Fig. 4).

Es konnte also gezeigt werden, dass das mit der Erfindung vorgeschlagene Mustererkennungssystem eine zuverlässige Erkennung weicher/nicht-weicher Stimmeinsätze erzielt, die z.B. für die Stottertherapie nach dem Fluency Shaping verwendet werden kann. Dies trifft auch für die Anwendung unter realistischen Bedingungen zu. Es wurde gezeigt, dass bisherige Ansätze (wie etwa gemäß US 4,020,567) dies nicht leisten (sondern dies nur tun für klar ausgeprägte, prototypische Daten, die unrealistisch für die Anwendung sind). Die Zuverlässigkeit des Systems ist in derselben Größenordnung wie die eines Therapeuten. Beispielsweise ergibt sich für die Unterscheidung "weich" vs. "nicht weich" bei 22.7% Fehlalarm eine Trefferquote von 58.5% für das System, während ein Therapeut im Mittel 71.5% erreicht.

## Patentansprüche

1. Verfahren zum Beurteilen einer Qualität eines Stimmeinsatzes eines Sprechenden, wobei ein akustisches Sprachsignal des Sprechenden erfasst und in ein digitales Sprachsignal gewandelt wird, wobei das digitale Sprachsignal in seinem zeitlichen Verlauf analysiert wird, um
a. In dem zeitlichen Verlauf des digitalen Sprachsignals einen Zeitpunkt des Stimmeinsatzes des Sprechenden zu bestimmen,
b. eine Grundfrequenz des Sprachsignals zum Zeitpunkt des Stimmeinsatzes zu ermitteln,
c. aus dem digitalen Sprachsignal in einem vorgegebenen Zeitintervall ab dem Zeitpunkt des Stimmeinsatzes zeitlich aufgelöst den Verlauf der bei der Grundfrequenz in dem Sprachsignal enthaltenen Energie zu ermitteln;
d. aus dem digitalen Sprachsignal in dem vorgegebenen Zeitintervall zeitlich aufgelöst den Verlauf der bei wenigstens einem harmonischen Vielfachen der Grundfrequenz in dem Sprachsignal enthaltenen Energie zu ermitteln;
e. den zeitlichen Verlauf des Verhältnisses der in Schritten c und d ermittelten Energien zu bestimmen,
**dadurch gekennzeichnet, dass** auf einen weichen Stimmeinsatz geschlossen wird, wenn in dem Zeitintervall das gemäß vorstehenden Schritt e. ermittelte Verhältnis der Energien zunächst von der Energie bei der Grundfrequenz dominiert wird und erst im weiteren Verlauf des vorgegebenen Zeitintervalls in einer Zeitspanne Δt das Verhältnis der Energien sich zugunsten der Energie(n) bei der/den harmonischen Vielfachen der Grundfrequenz verschiebt.

2. Verfahren nach Anspruch 1, **dadurch gekennzeichnet, dass** für die Bestimmung des Zeitpunktes des Stimmeinsatzes in Schritt a. ein RAPT-Algorithmus nach David Talkin verwendet wird.

3. Verfahren nach einem der vorhergehenden Ansprüche, **dadurch gekennzeichnet, dass** das vorgegebene Zeitintervall eine Länge von 7,5 bis 200 Millisekunden, insbesondere von 50 bis 100 Millisekunden, aufweist.

4. Verfahren nach einem der vorhergehenden Ansprüche, **dadurch gekennzeichnet, dass** die Zeitspanne Δt zwischen 50 und 100 Millisekunden ist und dieses als Kriterium für einen weichen Stimmeinsatz gewertet wird.

5. Verfahren nach einem der vorhergehenden Ansprüche, **dadurch gekennzeichnet, dass** neben einer Analyse des in Schritt e. ermittelten Verhältnisses der Energien auf weitere aus dem digitalen Sprachsignal abgeleitete Parameter zurückgegriffen wird, um zu bestimmen, ob es sich um einen weichen Stimmeinsatz handelt.

6. Datenverarbeitungsprogramm für die rechnergestützte, automatisierte Beurteilung einer Qualität eines Stimmeinsatzes eines Sprechenden, mit
a. einem Stimmeinsatzanalysemodul, das dazu eingerichtet ist, aus einem zeitlichen Verlauf eines aus einem akustischen Sprachsignal des Sprechenden gewonnenen digitalen Sprachsignals einen Zeitpunkt des Stimmeinsatzes des Sprechenden zu bestimmen,
b. einem Grundfrequenzermittlungsmodul, das dazu eingerichtet ist, eine Grundfrequenz des Sprachsignals zum Zeitpunkt des Stimmeinsatzes zu ermitteln,
c. einem Grundfrequenz-Energieermittlungsmodul, das dazu eingerichtet ist, aus dem digitalen Sprachsignal in einem vorgegebenen Zeitintervall ab dem Zeitpunkt des Stimmeinsatzes zeitlich aufgelöst den Verlauf der bei der Grundfrequenz in dem Sprachsignal enthaltenen Energie zu ermitteln;
d. einem Oberton-Energieermittlungsmodul, das dazu eingerichtet ist, aus dem digitalen Sprachsignal in dem vorgegebenen Zeitintervall zeitlich aufgelöst den Verlauf der bei harmonischen Vielfachen der Grundfrequenz in dem Sprachsignal enthaltenen Energie zu ermitteln;
e. einem Verhältnisbestimmungsmodul, das dazu eingerichtet ist, den zeitlichen Verlauf des Verhältnisses der von dem Grundfrequenz-Energieermittlungsmodul und dem Oberton-Energieermittlungsmodul ermittelten Energien zu bestimmen und auf einen weichen Stimmeinsatz zu schließen, wenn in dem Zeitintervall das Verhältnis der Energien zunächst von der Energie bei der Grundfrequenz dominiert wird und erst im weiteren Verlauf des vorgegebenen Zeitintervalls das Verhältnis der Energien sich zugunsten der Energien bei den harmonischen Vielfachen der Grundfrequenz verschiebt.

7. Datenverarbeitungsprogramm nach Anspruch 6, **dadurch gekennzeichnet, dass** es weiterhin ein Digitalisierungsmodul zum Erzeugen des digitalen Sprachsignals aus dem akustischen Sprachsignal enthält.

8. Datenverarbeitungsprogramm nach einem der Ansprüche 6 oder 7, **dadurch gekennzeichnet, dass** das Stimmeinsatzanalysemodul für die Bestimmung des Zeitpunktes des Stimmeinsatzes einen RAPT-Algorithmus nach David Talkin verwendet.

9. Datenverarbeitungsprogramm nach einem der Ansprüche 6 bis 8, **dadurch gekennzeichnet, dass** es als Anwendungssoftware für ein mobiles Endgerät, insbesondere ein Smartphone oder ein Tablet-Computer, ausgebildet ist.

10. Rechnergestütztes Datenverarbeitungsgerät, **dadurch gekennzeichnet, dass** es ein Datenverarbeitungsprogramm nach einem der Ansprüche 6 bis 9 enthält.

11. Rechnergestütztes Datenverarbeitungsgerät nach Anspruch 10, **dadurch gekennzeichnet, dass** es einen Eingang zur Aufnahme eines akustischen Sprachsignals aufweist.

12. Rechnergestütztes Datenverarbeitungsgerät nach einem der Ansprüche 10 oder 11, **dadurch gekennzeichnet, dass** es als mobiles Endgerät, insbesondere als Smartphone oder Tablet-Computer, ausgebildet ist.

## Claims

1. A method for evaluating a quality of a voice usage of a speaker, wherein an acoustic speech signal of the speaker is detected and converted into a digital speech signal, wherein the digital speech signal is analysed in its temporal progression in order
a. to determine in the temporal course of the digital speech signal a time of the voice usage of the speaker,
b. to determine a fundamental frequency of the speech signal at the time of voice usage,
c. to determine from the digital speech signal in a predetermined time interval from the time of the voice usage the temporally resolved course of the energy contained in the speech signal at the fundamental frequency;
d. to determine from the digital speech signal, temporally resolved in the predetermined time interval, the course of the energy contained in the speech signal at at least one harmonic multiple of the fundamental frequency;
e. determine the temporal course of the ratio of the energies determined in steps c and d,
**characterised in that**
a soft use of voice is concluded if, in the time interval, the ratio of the energies determined in accordance with the preceding step e. is first dominated by the energy at the fundamental frequency and only in the further course of the predetermined time interval in a period of time At does the ratio of the energies shift in favour of the energy (energies) at the harmonic multiple(s) of the fundamental frequency.

2. A method according to claim 1, **characterised in that** a RAPT algorithm according to David Talkin is used for determining the time of the voice usage in step a.

3. A method according to one of the preceding claims, **characterised in that** the predetermined time interval has a length of 7.5 to 200 milliseconds, in particular of 50 to 100 milliseconds.

4. A method according to one of the preceding claims, **characterised in that** the time span Δt is between 50 and 100 milliseconds and this is evaluated as a criterion for a soft use of voice.

5. A method according to one of the preceding claims, **characterised in that**, in addition to an analysis of the ratio of the energies determined in step e, further parameters derived from the digital speech signal are used in order to determine whether a soft voice insert is involved.

6. A data processing program for the computer-assisted, automated assessment of the quality of a voice usage of a speaker, with
a. a voice usage analysis module arranged to determine a time of the voice usage of the speaker from a time course of a digital speech signal obtained from an acoustic speech signal of the speaker,
b. a fundamental frequency center module adapted to determine a fundamental frequency of the speech signal at the time of voice usage,
c. a fundamental frequency energy determination module, which is adapted to determine from the digital speech signal in a predetermined time interval from the time of the voice usage, the course of the energy contained in the speech signal at the fundamental frequency in a temporally resolved manner;
d. an overtone energy determination module which is arranged to determine from the digital speech signal, time-resolved at the predetermined time interval, the course of the energy contained in the speech signal at harmonic multiples of the fundamental frequency;
e. a ratio determination module which is arranged to determine the temporal course of the ratio of the energies determined by the fundamental frequency energy determination module and the overtone energy determination module and to deduce a soft voice usage, if, in the time interval, the ratio of the energies determined in accordance with the preceding step e. is first dominated by the energy at the fundamental frequency and only in the further course of the predetermined time interval in a period of time At does the ratio of the energies shift in favour of the energies at the harmonic multiples of the fundamental frequency.

7. A data processing program according to claim 6, **characterised in that** it further comprises a digitisation module for generating the digital speech signal from the acoustic speech signal.

8. A data processing program according to any of claims 6 or 7, **characterised in that** the voice usage analysis module includes a David RAPT algorithm for determining the timing of the voice usage according to David Talkin.

9. A data processing program in accordance with one of claims 6 to 8, **characterised in that** it is designed as application software for a mobile terminal, in particular a smartphone or a tablet computer.

10. A computer-aided data processing device, **characterised in that** it contains a data processing program in accordance with one of claims 6 to 9.

11. A computer-aided data processing device according to claim 10, **characterised in that** it has an input for recording an acoustic speech signal.

12. A computer-aided data processing device according to one of claims 10 or 11, **characterised in that** it is designed as a mobile terminal, in particular as a smartphone or tablet computer.

## Revendications

1. Procédé d'évaluation de la qualité de l'utilisation de la voix d'un locuteur, dans lequel un signal vocal acoustique du locuteur est détecté et converti en un signal vocal numérique, dans lequel le signal vocal numérique est analysé dans sa progression temporelle afin
a. de déterminer dans le temps du signal vocal numérique un temps d'utilisation de la voix du locuteur,
b. de déterminer une fréquence fondamentale du signal vocal au moment de l'utilisation de la voix,
c. de déterminer, à partir du signal vocal numérique, dans un intervalle de temps prédéterminé à partir du moment de l'utilisation de la voix, l'évolution temporelle résolue de l'énergie contenue dans le signal vocal à la fréquence fondamentale;
d. de déterminer, à partir du signal vocal numérique, résolu temporellement dans l'intervalle de temps prédéterminé, le cours de l'énergie contenue dans le signal vocal à au moins un multiple harmonique de la fréquence fondamentale;
e. déterminer le cours temporel du rapport des énergies déterminées aux étapes c et d,
**caractérisé en ce que**
une utilisation douce de la voix est conclue si, dans l'intervalle de temps, le rapport des énergies déterminé conformément à l'étape précédente e. est d'abord dominé par l'énergie à la fréquence fondamentale et seulement dans le cours ultérieur de l'intervalle de temps prédéterminé dans une période de temps At fait le rapport des énergies en faveur de l'énergie (des énergies) au(x) multiple(s) harmonique(s) de la fréquence fondamentale.

2. Procédé selon la revendication 1, **caractérisé en ce qu'**un algorithme RAPT selon David Talkin est utilisé pour déterminer le temps d'utilisation de la voix dans l'étape a.

3. Procédé selon l'une des revendications précédentes, **caractérisé en ce que** l'intervalle de temps prédéterminé a une durée de 7,5 à 200 millisecondes, en particulier de 50 à 100 millisecondes.

4. Procédé selon l'une des revendications précédentes, **caractérisé en ce que** l'intervalle de temps Δt est compris entre 50 et 100 millisecondes et ceci est évalué comme critère pour une utilisation douce de la voix.

5. Procédé selon l'une des revendications précédentes, **caractérisé en ce que**, en plus d'une analyse du rapport des énergies déterminé à l'étape e, d'autres paramètres dérivés du signal vocal numérique sont utilisés pour déterminer s'il s'agit d'un insert vocal doux.

6. programme de traitement de données pour l'évaluation automatisée, assistée par ordinateur, de la qualité d'une utilisation de la voix d'un locuteur, avec
a. un module d'analyse de l'utilisation de la voix agencé pour déterminer un temps d'utilisation de la voix du locuteur à partir d'un cours du temps d'un signal vocal numérique obtenu à partir d'un signal vocal acoustique du locuteur,
b. un module de centre de fréquence fondamental conçu pour déterminer une fréquence fondamentale du signal vocal au moment de l'utilisation de la voix,
c. un module de détermination d'énergie de fréquence fondamentale, qui est conçu pour déterminer, à partir du signal vocal numérique dans un intervalle de temps prédéterminé à partir du moment de l'utilisation de la voix, le cours de l'énergie contenue dans le signal vocal à la fréquence fondamentale d'une manière résolue dans le temps;
d. un module de détermination d'énergie harmonique qui est agencé pour déterminer, à partir du signal vocal numérique, le cours de l'énergie contenue dans le signal vocal à des multiples harmoniques de la fréquence fondamentale, résolu dans le temps à l'intervalle de temps prédéterminé;
e. un module de détermination de rapport qui est agencé pour déterminer le cours temporel du rapport des énergies déterminé par le module de détermination d'énergie de fréquence fondamentale et le module de détermination d'énergie harmonique et pour déduire une utilisation de voix douce, si, dans l'intervalle de temps, le rapport des énergies déterminé selon l'étape précédente e. est d'abord dominé par l'énergie à la fréquence fondamentale et seulement dans la suite du cours du laps de temps prédéterminé dans une période donnée Au fait le rapport des énergies change en faveur des énergies aux multiples harmoniques de la fréquence fondamentale.

7. Programme de traitement de données selon la revendication 6, **caractérisé en ce qu'**il comprend en outre un module de numérisation pour générer le signal vocal numérique à partir du signal vocal acoustique.

8. Programme de traitement de données selon l'une quelconque des revendications 6 ou 7, **caractérisé en ce que** le module d'analyse d'utilisation de la voix comprend un algorithme David RAPT pour déterminer le moment de l'utilisation de la voix selon David Talkin.

9. Programme de traitement de données selon l'une des revendications 6 à 8, **caractérisé en ce qu'**il est conçu comme logiciel d'application pour un terminal mobile, en particulier un smartphone ou une tablette PC.

10. Dispositif de traitement de données assisté par ordinateur, **caractérisé en ce qu'**il contient un programme de traitement de données selon l'une des revendications 6 à 9.

11. Dispositif de traitement de données assisté par ordinateur selon la revendication 10, **caractérisé en ce qu'**il comporte une entrée pour enregistrer un signal vocal acoustique.

12. Dispositif de traitement de données assisté par ordinateur selon l'une des revendications 10 ou 11, **caractérisé en ce qu'**il est conçu comme terminal mobile, en particulier comme smartphone ou ordinateur tablette.
